(19) Europäisches Patentamt
European Patent Office
Office européen des brevets

(11) EP 2 817 597 B1

(12) EUROPÄISCHE PATENTSCHRIFT

(45) Veröffentlichungstag und Bekanntmachung des Hinweises auf die Patenterteilung:
01.02.2017 Patentblatt 2017/05

(21) Anmeldenummer: 13709311.8

(22) Anmeldetag: 21.02.2013

(51) Int Cl.:
G01K 1/20 (2006.01)    G01K 7/13 (2006.01)
G01K 7/02 (2006.01)    G01K 7/10 (2006.01)
G01K 7/16 (2006.01)

(86) Internationale Anmeldenummer:
PCT/EP2013/000501

(87) Internationale Veröffentlichungsnummer:
WO 2013/124062 (29.08.2013 Gazette 2013/35)

(54) **TEMPERATURMESS-MODUL MIT LAGEKOMPENSATION**

TEMPERATURE MEASURING MODULE HAVING POSITION COMPENSATION

MODULE DE MESURE THERMIQUE À COMPENSATION DE POSITION

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 23.02.2012 DE 102012003407

(43) Veröffentlichungstag der Anmeldung:
31.12.2014 Patentblatt 2015/01

(73) Patentinhaber: Phoenix Contact GmbH & Co. KG
32825 Blomberg (DE)

(72) Erfinder:
• LOHRE, Hubertus
32839 Steinheim (DE)
• JÖSTINGMEIER, Norbert
32657 Lemgo (DE)

(74) Vertreter: Janke, Christiane
Phoenix Contact GmbH & Co. KG
Intellectual Property, Licenses & Standards
Flachsmarktstraße 8
32825 Blomberg (DE)

(56) Entgegenhaltungen:
EP-A2- 0 285 120    DE-A1- 1 940 009
US-A1- 2008 165 827

## Beschreibung

Die Erfindung betrifft ein Temperaturmess-Modul.

Aus dem Stand der Technik sind Thermoelemente bekannt, welche zur Messung hoher Temperaturen verwendet werden. Diese Thermoelemente bestehen in aller Regel aus zwei metallischen Leitern, die an einer Stelle punktförmig elektrisch leitend verbunden sind. Dabei weisen die zwei metallischen Leiter eine unterschiedliche chemische Zusammensetzung auf.

Üblicherweise wird die punktförmige Verbindungsstelle, welche auch als hot junction bezeichnet wird, an die zu messenden Stelle gebracht, während die beiden anderen Enden der metallischen Leiter, welche auch als cold junction bezeichnet werden, an eine Referenzstelle geführt werden.

Weisen die Messstelle und die Referenzstelle eine unterschiedliche Temperatur auf, so bildet sich zwischen den unverbundenen Leiterenden eine Spannung aus, die auch als Thermospannung bzw. Thermokraft bezeichnet wird. Diese Eigenschaft ist auch als Seebeck-Effekt bekannt. Für die Thermospannung gilt der nachfolgende Zusammenhang

$$\int_{T_1}^{T_2}(S_2(T)-S_1(T))dT \ .$$ Dabei ist $T_2$ die Temperatur der Messstelle und $T_1$ die Temperatur der Referenzstelle. Der Seebeck-Koeffizient $S_1$ ist eine Materialkonstante des ersten Leiters und der Seebeck-Koeffizient $S_2$ ist eine Materialkonstante des zweiten Leiters. Es ist anzumerken, dass auch die Seebeck-Koeffizient von der Temperatur abhängen können.

Der Seebeck-Koeffizienten hat die Dimension einer elektrischen Spannung pro Temperaturdifferenz (Volt/Kelvin). Die typische Größenordnung liegt für Metalle um Raumtemperatur bei 10 $\mu$V/K.

Für kleine Temperaturdifferenzen und konstante Werte für die Seebeck-Koeffizienten vereinfacht sich die Formel zu $U = (S_2 - S_1) \cdot (T_2 - T_1)$.

Da die Thermospannung nur eine Temperaturdifferenz angibt, muss für einen absoluten Temperaturmesswert noch die Temperatur der Referenzstelle bestimmt werden. Dies wird über einen anderen Temperatursensor realisiert, z.B. einen temperaturabhängigen Widerstand.

Im industriellen Umfeld werden solche Messsysteme modularisiert in Schaltschränke eingebaut. Dabei befindet sich die Auswerteschaltung als auch die Referenzstelle in räumlicher Nähe zueinander, während die Messstelle auch weiter entfernt liegen kann. Typischerweise befindet sich die Auswerteschaltung in einem Temperaturmess-Modul, das mit einem Thermoelement oder mehreren Thermoelementen verbunden ist.

Es zeigt sich jedoch, dass die Temperaturmesswerte der Referenzstelle in Abhängigkeit von der Einbaulage des Temperaturmess-Moduls verfälscht sind. Zwar besteht in aller Regel die Möglichkeit jeweils eine Kompensation vor Ort durch eine Vergleichsmessung zu ermitteln und einzustellen, jedoch ist diese Vorgehensweise zeitintensiv und fehlerträchtig.

In der EP 0285 120 A2 ist eine Einrichtung 10 offenbart, die einen temperaturempfindlichen Widerstandswert aufweist. Diese Einrichtung 10 ist Bestandteil des Spannungsteilers R1, 10, welche zusammen mit dem weiteren Spannungsteiler R2, R3, eine Brückenschaltung als Eingangsstufe für den Operationsverstärker 23 bilden. Dabei ist festzustellen, dass der +-Eingang des Operationsverstärkers 23 lediglich das Signal, welches sich aus einer Thermokomponente der Referenzstelle und der Thermokomponente der Messstelle zusammen ergibt, misst. Eine derartige Anordnung entspricht einer Temperaturkompensation, die es nicht erlaubt, die Temperatur der Referenzstelle getrennt zu erfassen.

In der US-Patentanmeldung US 2008/165827 A1 ist ein Verfahren zur Kompensation einer logisch seriellen Kette von Vergleichsmessstelle bekannt, wobei eine Vergleichsmessstelle als Master fungiert. Dabei wird die zusätzliche Wärme weiterer Geräte kompensiert, die sich in der Nachbarschaft befinden. Die Anordnung ist jedoch nicht geeignet, die räumlich physikalische Anordnung eines Temperaturmess-Moduls in Bezug auf seine Eigenwärme zu berücksichtigen.

Der Erfindung liegt die Aufgabe zu Grunde, ein Temperaturmess-Modul bereitzustellen, das diese Nachteile umgeht.

Diese Aufgabe wird durch die Merkmale des Anspruches 1 gelöst. Vorteilhafte Weiterbildungen sind auch Gegenstand der abhängigen Ansprüche.

Es zeigen die

Fig. 1 eine Ausführungsform eines erfindungsgemäßen Temperaturmess-Moduls, und
Fig. 2 Details gemäß verschiedener Ausführungsformen eines erfindungsgemäßen Temperaturmess-Modul.

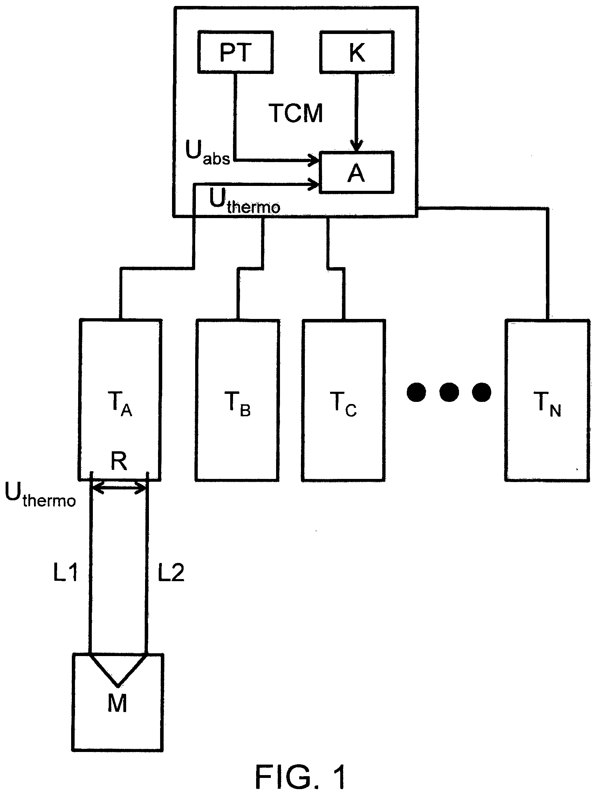

Die Erfindung schlägt ein Temperaturmess-Modul TCM vor, welches beispielhaft in Figur 1 dargestellt ist. Das Temperaturmess-Modul TCM ist zur Verbindung mit einem Thermoelement $T_A$ oder mehreren Thermoelementen $T_A$, $T_B$, $T_C$, $T_N$ vorgesehen.

Ein Thermoelement weist zwei metallische Leiter L1, L2 auf, welche beispielhaft nur an einem Thermoelement $T_A$ gezeigt sind. Die metallischen Leiter L1, L2 weisen an einer Referenzstelle R eine erste Temperatur $T_1$ auf und an einer Messstelle M - z.B. am zu messenden Objekt - eine weitere Temperatur $T_2$ auf. Die zwei metallischen Leiter L1, L2 weisen zumindest teilweise eine unterschiedliche chemische Zusammensetzung auf. An der Messstelle M sind die zwei metallischen Leiter L1, L2 punktförmig elektrisch leitend verbunden. Abhängig von dem Temperaturunterschied $\Delta T = T_2 - T_1$ zwischen der ersten Temperatur $T_1$ und der zweiten Temperatur $T_2$ bildet sich eine elektrische Thermo-Spannung $U_{thermo}$ zwischen den beiden Leitern L1 und L2 an der Referenzstelle R aus.

Das Temperaturmess-Modul TCM weist weiterhin einen temperaturabhängigen Widerstand PT auf. Über den beispielhaften temperaturabhängigen Widerstand PT wird die Temperatur $T_1$ der Referenzstelle R - beispielsweise als Widerstands-Spannung $U_{abs}$ - erfasst. Wesentlich ist hier nur, dass eine Messgröße erfasst wird, aus der eine absolute Temperatur abgeleitet werden kann.

Das Temperaturmess-Modul TCM weist weiterhin eine Auswerteschaltung A auf, die es erlaubt mittels der elektrischen Widerstands-Spannung $U_{abs}$ oder einem vergleichbaren Signal, das die absolute Temperatur $T_1$ der Referenzstelle R wiederspiegelt, und der Thermo-Spannung $U_{thermo}$ oder einem vergleichbaren Signal, das den Temperaturunterschied $\Delta T$ wiederspiegelt, einen ersten Temperaturwert $T_{mess1}$ der Messstelle M zu bestimmen.

Um nun thermische Einflüsse der Auswerteschaltung A, welche lageabhängig auf die Referenzstelle R und/oder die Messstelle M thermisch einwirken, zumindest teilweise kompensieren zu können, weist das Temperaturmess-Modul TCM weiterhin ein Kompensationsmittel K auf, das abhängig von der Einbaulage des Temperaturmess-Modul TCM den ersten Temperaturwert $T_{mess1}$ verändert, so dass thermische Einflüsse der Auswerteschaltung A kompensiert werden.

Die vorzunehmenden Änderungen können beispielsweise für eine Produktserie ermittelt werden und fest vorgegeben sein oder aber um Toleranzen ausgleichen zu können, kann jedes einzelne Temperaturmess-Modul TCM individuell für einzelne Lagen programmiert werden. D.h., die Kompensation ist bereits für einzelne Einbaulagen vorermittelt.

Je nach zur Verfügung stehenden Möglichkeiten können die Kompensationsmittel K eine digitale Kompensation oder eine analoge Kompensation, z.B. in Form eines Widerstandsnetzwerkes oder dergleichen, bereitstellen.

Weiterhin kann vorgesehen sein, dass die Kompensationsmittel K einen horizontalen Einbau, einen vertikalen Einbau oder einen liegenden Einbau oder auch unterschiedliche Kombinationen hiervon kompensieren können.

So kann z.B. vorgesehen sein, für jede dieser Einbaulagen eine Schalterstellung an einer gemeinsamen Einstellung vorzusehen, oder aber es kann für jede dieser Lagen eine getrennte Einstellung vorgesehen sein.

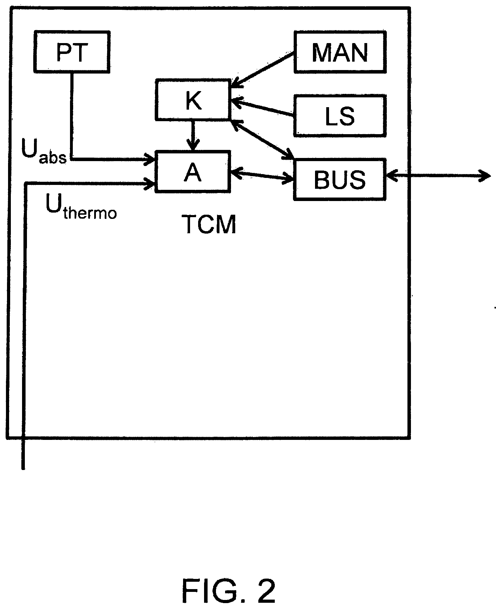

Beispielsweise kann, wie in Figur 2 angedeutet, die Art der Kompensation K durch eine Auswahl MAN am Gerät vorgenommen werden. Dies kann z.B. über einen Codierschalter realisiert werden, der auf eine analoge Schaltung oder eine digitale Schaltung einwirkt.

Weiterhin kann die Art der Kompensation K durch eine Auswahl über ein Bussystem BUS vorgenommen werden und von diesem unter Umständen auch abgefragt werden.

Darüber hinaus kann auch vorgesehen sein, dass die Art der Kompensation K durch einen Lagesensor LS im Temperaturmess-Modul TCM erkannt und ausgewählt wird. Geeignete Lagesensoren können beispielsweise auf Basis einfacher Neigungssensoren, Flüssigkeitsschaltern oder dergleichen realisiert werden.

Darüber hinaus kann auch vorgesehen sein, dass die erkannte Lage und/oder eingestellte Lage über ein Bussystem abfragbar ist.

Selbstverständlich können diese Einstellvarianten auch in unterschiedlichster Kombination vorgesehen sein, wobei dann weiterhin vorgesehen sein kann, dass eine Einstellvariante eine andere Einstellvariante ausschließt. Z.B. kann vorgesehen sein, dass eine lokale manuelle Einstellung MAN allen anderen Einstellvarianten vorgeht.

Wird nun ein erfindungsgemäßes Temperaturmess-Modul TCM eingebaut, so kann beim Einbau die Lage vor Ort über einen der verschiedenen Konfigurationswege eingestellt bzw. erkannt und eingestellt werden.

Der mittels der Kompensationsmittel K veränderte Temperaturmesswert kann anschließend über das Bussystem BUS und/oder über eine am Temperaturmess-Modul TCM vorgesehene Anzeige zur Verfügung gestellt werden.

Mittels der vorgestellten Erfindung ist es somit auf einfache Art und Weise möglich Fehler, die zuvor durch verschiedene Einbaulagen hervorgerufen waren, zu beseitigen und somit eine einfache und sichere Lösung anzubieten.

Bezugszeichenliste

| | |
|---|---|
| Auswerteschaltung | A |
| Kompensationsmittel | K |
| Metallisch Leiter | L1, L2 |
| Lagesensor | LS |
| Messstelle | M |
| Temperaturabhängiger Widerstand | PT |
| Referenzstelle | R |

(fortgesetzt)

| Thermo-Element | $T_A, T_B, T_C, \ldots T_N$ |
| Temperaturmess-Modul | TCM |
| erste Temperatur | T1 |
| zweite Temperatur | T2 |
| Temperaturunterschied | $\Delta T$ |
| elektrische Thermo-Spannung | $U_{thermo}$ |
| Widerstands-Spannung | $U_{abs}$ |

**Patentansprüche**

1. Temperaturmess-Modul (TCM) mit Lagekompensation, wobei das Temperaturmess-Modul (TCM) zur Verbindung mit einem Thermoelement ($T_A$) oder mehreren Thermoelementen ($T_A$, $T_B$, $T_C$, ... $T_N$) vorgesehen ist, wobei ein Thermoelement zwei metallische Leiter (L1, L2) aufweist, die an einer Referenzstelle (R) eine erste Temperatur (T1) aufweisen und die an einer Messstelle (M) eine weitere Temperatur (T2) aufweisen, wobei die zwei metallischen Leiter zumindest teilweise eine unterschiedliche chemische Zusammensetzung aufweisen, wobei die zwei metallischen Leiter (L1, L2) an der Messstelle (M) punktförmig elektrisch leitend verbunden sind, wobei abhängig von dem Temperaturunterschied ($\Delta T$) zwischen der ersten Temperatur (T1) und der zweiten Temperatur (T2) eine elektrische Thermo-Spannung ($U_{thermo}$) sich zwischen den beiden Leitern (L1, L2) an der Referenzstelle (R) ausbildet, und wobei das Temperaturmess-Modul (TCM) weiterhin einen temperaturabhängigen Widerstand (PT) aufweist, über den die Temperatur (T1) der Referenzstelle (R) als Widerstands-Spannung ($U_{abs}$) erfasst werden kann, und wobei das Temperaturmess-Modul (TCM) weiterhin eine Auswerteschaltung (A) aufweist, die es erlaubt mittels der elektrische Widerstands-Spannung ($U_{abs}$) und der Thermo-Spannung ($U_{thermo}$) einen ersten Temperaturwert ($T_{mess1}$) der Messstelle (M) zu bestimmen, **dadurch gekennzeichnet,** **dass** das Temperaturmess-Modul (TCM) weiterhin ein Kompensationsmittel (K) aufweist, das in der Lage ist abhängig von der Einbaulage des Temperaturmess-Moduls (TCM) den ersten Temperaturwert ($T_{mess1}$) zu verändern, um thermische Einflüsse der Auswerteschaltung (A), welche lageabhängig auf die Referenzstelle (R) und/oder die Messstelle (M) thermisch einwirken, zumindest teilweise zu kompensieren.

2. Temperaturmess-Modul (TCM) nach Anspruch 1, wobei die Kompensationsmittel (K) eine digitale Kompensation bereitstellen.

3. Temperaturmess-Modul (TCM) nach Anspruch 1 oder 2, **dadurch gekennzeichnet,** **dass** die Kompensation (K) einen horizontalen Einbau, einen vertikalen Einbau oder einen liegenden Einbau kompensiert.

4. Temperaturmess-Modul (TCM) nach Anspruch 1, 2 oder 3, **dadurch gekennzeichnet,** **dass** die Art der Kompensation (K) durch eine Auswahl am Gerät vorgenommen werden kann.

5. Temperaturmess-Modul (TCM) nach einem der vorhergehenden Ansprüche, **dadurch gekennzeichnet,** **dass** die Art der Kompensation (K) durch eine Auswahl über ein Bussystem vorgenommen werden kann.

6. Temperaturmess-Modul (TCM) nach einem der vorhergehenden Ansprüche, **dadurch gekennzeichnet,** **dass** die Art der Kompensation (K) durch einen Lagesensor (LS) im Temperaturmess-Modul (TCM) ausgewählt wird.

**Claims**

1. Temperature measuring module (TCM) with position compensation, wherein the temperature measuring module (TCM) is intended to be connected to a thermal element ($T_A$) or a plurality of thermal elements ($T_A$, $T_B$, $T_C$, ... $T_N$), wherein a thermal element has two metal conductors (L1, L2) which are at a first temperature (T1) at a reference point (R) and which are at a further temperature (T2) at a measuring point (M), wherein the two metal conductors have a different chemical composition at least to some extent, wherein the two metal conductors (L1, L2) are electrically conductively connected in a punctiform manner at the measuring point (M), wherein an electrical thermal voltage ($U_{thermo}$) forms between the two conductors (L1, L2) at the reference point (R) depending on the temperature difference ($\Delta T$) between the first temperature (T1) and the second temperature (T2), and wherein the temperature measuring module (TCM) further has a temperature-dependent resistor (PT) across which the temperature (T1) of the reference point (R) can be detected as resistor voltage ($U_{abs}$), and wherein the temperature measuring module (TCM) further has an evaluation circuit (A) which allows a first temperature value ($T_{measure1}$) of the measuring point (M) to be determined by means of the electrical resistor voltage ($U_{abs}$) and the thermal voltage ($U_{thermo}$), **characterized in that** the temperature measuring module (TCM) further has a compensation means (K) which is able to change the first temperature value ($T_{measure1}$) depending on the installation position of the temperature measuring module (TCM) in order to at least partially compensate for thermal influences of the evaluation circuit (A) which, in a position-dependent manner, have a thermal effect on the reference point (R) and/or the measuring point (M).

2. Temperature measuring module (TCM) according to Claim 1, wherein the compensation means (K) provide digital compensation.

3. Temperature measuring module (TCM) according to Claim 1 or 2, **characterized in that** the compensation (K) compensates for horizontal installation, vertical installation or recumbent installation.

4. Temperature measuring module (TCM) according to Claim 1, 2 or 3, **characterized in that** the type of compensation (K) can be selected on the device.

5. Temperature measuring module (TCM) according to one of the preceding claims, **characterized in that** the type of compensation (K) can be selected by means of a bus system.

6. Temperature measuring module (TCM) according to one of the preceding claims, **characterized in that** the type of compensation (K) is selected by a position sensor (LS) in the temperature measuring module (TCM).

## Revendications

1. Module de mesure de température (TCM) avec compensation de position, le module de mesure de température (TCM) étant conçu pour une liaison avec un thermocouple ($T_A$) ou plusieurs thermocouples ($T_A$, $T_B$, $T_C$, ... TN), un thermocouple possédant deux conducteurs métalliques (L1, L2) qui présentent une première température (T1) à un point de référence (R) et qui présentent une température supplémentaire (T2) à un point de mesure (M), les deux conducteurs métalliques possédant au moins partiellement une composition chimique différente, les deux conducteurs métalliques (L1, L2) étant reliés ponctuellement de manière électriquement conductrice au niveau du point de mesure (M), une tension thermoélectrique ($U_{thermo}$) se formant entre les deux conducteurs (L1, L2) au point de référence (R) en fonction de la différence de température ($\Delta T$) entre la première température (T1) et la deuxième température (T2), et le module de mesure de température (TCM) possédant en outre une résistance dépendante de la température (PT), par le biais de laquelle la température (T1) du point de référence (R) peut être détectée sous la forme d'une tension ohmique ($U_{abs}$), et le module de mesure de température (TCM) possédant en outre un circuit d'interprétation (A) qui permet de déterminer, au moyen de la tension ohmique ($U_{abs}$) électrique et de la tension thermoélectrique ($U_{thermo}$), une première valeur de température ($T_{mess1}$) du point de mesure (M),
**caractérisé en ce
que** le module de mesure de température (TCM) possède en outre un moyen de compensation (K) qui est capable de modifier la première valeur de température ($T_{mess1}$) en fonction de la position de montage du module de mesure de température (TCM) afin de compenser au moins partiellement les influences thermiques du circuit d'interprétation (A), lesquelles ont un effet thermique dépendant de la position sur le point de référence (R) et/ou le point de mesure (M).

2. Module de mesure de température (TCM) selon la revendication 1, les moyens de compensation (K) réalisant une compensation numérique.

3. Module de mesure de température (TCM) selon la revendication 1 ou 2, **caractérisé en ce que** la compensation (K) compense un montage horizontal, un montage vertical ou un montage à plat.

4. Module de mesure de température (TCM) selon la revendication 1, 2 ou 3, **caractérisé en ce que** la nature de la compensation (K) peut être appliquée par une sélection sur l'appareil.

5. Module de mesure de température (TCM) selon l'une des revendications précédentes, **caractérisé en ce que** la nature de la compensation (K) peut être appliquée par une sélection par le biais d'un système de bus.

6. Module de mesure de température (TCM) selon l'une des revendications précédentes, **caractérisé en ce que** la nature de la compensation (K) est sélectionnée par un capteur de position (LS) dans le module de mesure de température (TCM).

FIG. 1

FIG. 2

**IN DER BESCHREIBUNG AUFGEFÜHRTE DOKUMENTE**

**In der Beschreibung aufgeführte Patentdokumente**

- EP 0285120 A2
- US 2008165827 A1